# EUROPEAN PATENT APPLICATION

(11) **EP 4 366 385 A1**
(43) Date of publication of application: **08.05.2024**
(21) Application number: 23207600.0
(22) Date of filing: 03.11.2023
(51) Int. Cl.: H04W 40/02

(54) **URSP RULE REUSING PDN LEGGED MA PDU SESSION HANDLING**

(30) Priority: 04.11.2022 US 202263382307 P; 29.10.2023 US 202318496903
(71) Applicant: MEDIATEK, INC., 300 Hsin-Chu City (TW)
(72) Inventor: LIN, Yuan-Chieh, 30078 Hsinchu City (TW); LAI, Chia-Lin, 30078 Hsinchu City (TW)
(74) Representative: Hoefer & Partner Patentanwälte mbB

(57) **Abstract**

A method for UE route selection policy (URSP) rule matching enhancement for MA PDU session with 4G PDN leg is proposed. When an application is executed, the upper layer of a UE sends the application information to URSP entity for matching a URSP rule. The UE selects and evaluates a route selection descriptor (RSD) from a list of RSDs of a selected URSP rule to be matched with a PDU session. In one example, the PDU session is an MA PDU session with a 3GPP EPS/PDN leg (PDN connection established as user plane resources of the MA PDU session) . The UE finds the traffic descriptor in a selected URSP rule matching the application and an existing MA PDU session/PDN connection matching an RSD of the selected URSP rule, when the UE-requested PDN parameters of the PDN connection matches with the RSD of the selected URSP rule.

## Description

### Field of the Invention

The disclosed embodiments relate generally to wireless communication, and, more particularly, to method of provisioning and handling of UE Route Selection Policy (URSP) for MA PDU sessions with PDN leg as 3GPP user plane resources.

### Background of the Invention

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless networks, such as GSM, CDMA, and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs) . The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS) .

The UE policies for 5GS include UE route selection policy (URSP) and access network discovery and selection policy (ANDSP). The UE policies can be delivered from a Policy Control Function (PCF) to UE. PCF takes care of network policies to manage network behavior. PCF gets the subscription information from Unified Data Management (UDM) . PCF interfaces to both Access and Mobility Function (AMF) to manage the mobility context and Session Management Function (SMF) to manage the session contexts. PCF also plays a crucial role in providing a schema for network slicing and roaming. PCF triggers the URSP which enables the UE to determine how a certain application should be handled in the context of an existing or new PDN connection in EPS or PDU session in 5GS.

In 4G evolved packet system (EPS), a Packet Data Network (PDN) connectivity procedure is an important process when LTE communication system accesses to the packet data network. The purpose of PDN connectivity procedure is to set up a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. When an application is executed, the upper layer of the UE sends the application information to the URSP entity for matching a URSP rule (i.e., by evaluating the traffic descriptor), and use the corresponding RSD (Route Selection Descriptor) of the selected URSP rule to associate with an existing PDU session or to establish a new PDU session. The UE tries to reuse an existing PDU session.

Operators are seeking ways to balance data traffic between mobile cellular networks and non-3GPP access in a way that is transparent to users and reduces mobile network congestion. In 5GS, UEs that can be simultaneously connected to both 3GPP access (3GPP access of 5GS, or 3GPP access of EPC) and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. A MA PDU session uses one 3GPP access network or one non-3GPP access network at a time, or simultaneously one 3GPP access network and one non-3GPP access network. At any given time, the MA PDU session can have user-plane resources established on both 3GPP access (also referred as 3GPP leg, e.g., 3GPP 5GS leg or 3GPP EPS/PDN leg) and non-3GPP access (also referred as non-3GPP leg), or on one access only.

During the URSP rule evaluation and the RSD matching with a PDU session, the UE checks whether the parameters associated with the PDU session or the parameters requested by the UE during the PDU session establishment procedure match the route selection descriptors of the URSP rule except the preferred access type and the multi-access preference. Specifically, the UE ONLY considers the UE-requested parameters during PDU procedure (in 5GS). However, the UE-requested parameters for a PDN connection during PDN procedure (in EPS) are not considered. A solution is sought.

### Summary of the Invention

This is achieved by a method and user equipment according to claims 1 and 2. The dependent claims pertain to corresponding further developments and improvements.

As will be seen more clearly from the detailed description following below, a method for UE route selection policy (URSP) rule matching enhancement for MA PDU session with 4G PDN leg is proposed. When an application is executed, the upper layer of a UE sends the application information to URSP entity for matching a URSP rule. The UE selects and evaluates a route selection descriptor (RSD) from a list of RSDs of a selected URSP rule to be matched with a PDU session. In one example, the PDU session is an MA PDU session with a 3GPP EPS/PDN leg (PDN connection established as user plane resources of the MA PDU session) . The UE finds the traffic descriptor in a selected URSP rule matching the application and an existing MA PDU session/PDN connection matching an RSD of the selected URSP rule, when the UE-requested PDN parameters of the PDN connection matches with the RSD of the selected URSP rule.

In one aspect, a UE initiates a UE Route Selection Policy (URSP) rule matching procedure in a mobile communication network, wherein the UE selects a URSP rule from one or more URSP rules . The UE matches a traffic descriptor of the selected URSP rule with an application information. The UE selects and evaluating a route selection descriptor (RSD) from a list of RSDs of the selected URSP rule to be matched with a multi-access (MA) PDU session, wherein a PDN connection is established as 3GPP user plane resources for the MA PDU session. The UE determines the RSD of the selected URSP rule matches with the MA PDU session when UE-requested PDN parameters of the PDN connection matches with the RSD of the selected URSP rule. Other embodiments and advantages are described in the detailed description below. This summary does not purport to define the invention. The invention is defined by the claims.

### Brief Description of the Drawings

The accompanying drawings, where like numerals indicate like components, illustrate embodiments of the invention.
Figure 1 illustrates an exemplary 5G network 100 supporting User Equipment (UE) route selection policy (URSP) handling with enhancement for MA PDU sessions with 4G PDN leg in accordance with one novel aspect.
Figure 2 illustrates simplified block diagrams of a user equipment (UE) and a base station in accordance with embodiments of the current invention.
Figure 3 illustrates the content of a URSP rule as defined in 3GPP specification and parameters for URSP rule matching for MA PDU with PDN leg.
Figure 4 illustrates examples of URSP rule matching for an application, where UE requested PDN parameters are considered to match with certain RSD components of an RSD of a selected URSP rule.
Figure 5 illustrates a first embodiment of a sequence flow between a UE and the network for URSP rule matching for MA PDU with PDN leg in accordance with one novel aspect.
Figure 6 illustrates a second embodiment of a sequence flow between a UE and the network for URSP rule matching for MA PDU with PDN leg in accordance with one novel aspect.
Figure 7 is a flow chart of a method of URSP rule matching in accordance with one novel aspect of the present invention.

### Detailed Description

Reference will now be made in detail to some embodiments of the invention, examples of which are illustrated in the accompanying drawings.

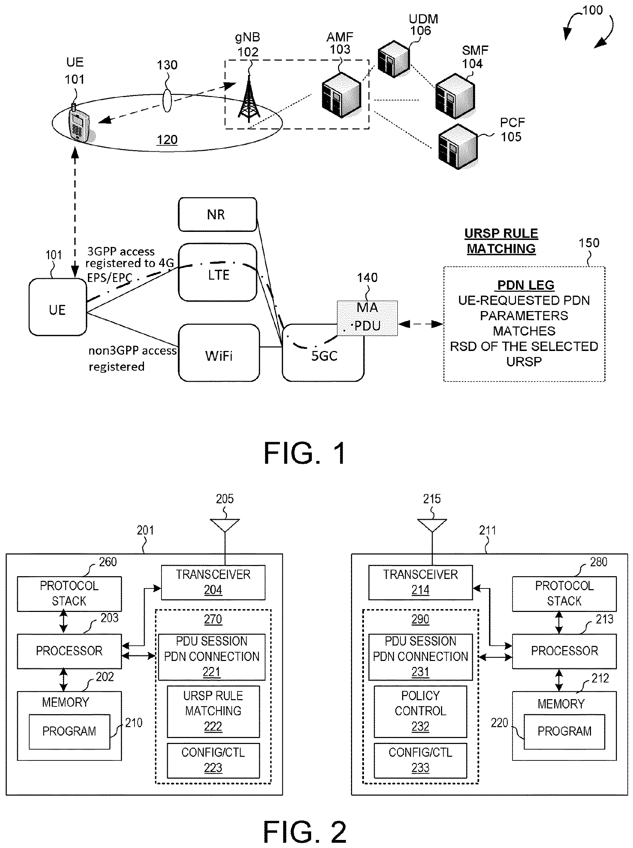

Figure 1 illustrates an exemplary 5G network 100 supporting User Equipment (UE) route selection policy (URSP) handling with enhancement for MA PDU sessions with 4G PDN leg in accordance with one novel aspect. 5G new radio (NR) system (5GS) 100 comprises a user equipment UE 101, a base station gNB 102, an access and mobility management function (AMF) 103, a session management function (SMF) 104, a policy control function (PCF) 105, and a unified data management (UDM) 106. In the example of Figure 1, UE 101 and its serving base station gNB 102 belong to part of a radio access network RAN 120. In Access Stratum (AS) layer, RAN 120 provides radio access for UE 101 via a radio access technology (RAT) . In Non-Access Stratum (NAS) layer, AMF 103 communicates with gNB 102 and 5GC for access and mobility management of wireless access devices in 5G network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

5GS networks are packet-switched (PS) Internet Protocol (IP) networks. When UE joins a 5GS network, a PDU address (i.e., the one that can be used on the PDU) is assigned to the UE for its connection to the PDU. In 4G, EPS has defined a Default EPS Bearer to provide the IP Connectivity. In 5G, a Protocol Data Unit (PDU) session establishment procedure is a parallel procedure of a PDN connection procedure in 4G. A PDU session (e.g., 130) defines the association between the UE and the data network that provides a PDU connectivity service. Each PDU session is identified by a PDU session ID, and may include multiple QoS flows and QoS rules.

The UE policies for 5GS include UE route selection policy (URSP) and access network discovery and selection policy (ANDSP). The UE policies can be delivered from Policy Control Function (PCF) to UE. PCF takes care of network policies to manage network behavior. PCF gets the subscription information from Unified Data Management (UDM) . PCF interfaces to both Access and Mobility Function (AMF) to manage the mobility context and Session Management Function (SMF) to manage the session contexts. PCF also plays a crucial role in providing a scheme for network slicing and roaming. PCF provisions the URSP which enables the UE to determine how a certain application should be handled in the context of an existing or new PDU session. The UE policies can also be pre-configured in the UE (USIM or NVRAM). The pre-configured policy should be applied by UE only when UE has not received the same type of policy from the PCF.

In 5GS, UEs can be simultaneously connected to both 3GPP access (3GPP access of 5GS, or 3GPP access of EPC) and non-3GPP access (using 3GPP NAS signalling) . Accordingly, 3GPP introduced Multi-Access (MA) PDU session in 5GS. At any given time, an MA PDU session can have user-plane resources established on both 3GPP access (also referred as 3GPP leg, e.g., 3GPP 5GS leg or 3GPP EPS/PDN leg) and non-3GPP access (also referred as non-3GPP leg), or on one access only. During the URSP rule evaluation and the RSD matching with a PDU session, the UE checks whether the parameters associated with the PDU session or the parameters requested by the UE during the PDU session establishment procedure match the route selection descriptors of the URSP rule except the preferred access type and the multi-access preference. Specifically, the UE ONLY considers the UE-requested parameters during PDU procedure (in 5GS). However, the UE-requested parameters for a PDN connection during PDN procedure (in EPS) are not considered.

In one novel aspect, a method for UE route selection policy (URSP) rule matching enhancement for MA PDU session with 4G PDN leg is proposed. In the example of Figure 1, UE 101 is registered to 4G EPS/EPC (LTE) for 3GPP access, and is registered to 5GC via WiFi for non-3GPP access. Note that UE 101 may not be registered to 5GC via NR for 3GPP access. Next, UE 101 performs PDN connectivity procedure for the purpose of establishing an MA PDU session (140). UE 101 establishes a PDN connection as 3GPP user-plane resource of the MA PDU session to be established. UE 101 then considers that MA PDU session 140 is established based on PDN parameters of the PDN connection provided by the network. When an application is executed, the upper layer of UE 101 sends the application information to URSP entity for matching a URSP rule. UE 101 selects and evaluates a route selection descriptor (RSD) from a list of RSDs of a selected URSP rule to be matched with a PDU session. In one novel aspect, as depicted in 150, UE 101 determines MA PDU session 140 matches an RSD of the selected URSP rule, when UE-requested PDN parameters of the PDN connection matches with the RSD of the selected URSP rule.

Figure 2 illustrates simplified block diagrams of wireless devices, e.g., a UE 201 and network entity 211 in accordance with embodiments of the current invention. Network entity 211 may be a base station combined with an MME or AMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session handling circuit 231 handles PDU session/PDN connection establishment and modification procedures. Policy control module 232 that configures policy rules for UE. Configuration and control circuit 233 provides different parameters to configure and control UE of related functionalities including mobility management and session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise application layer and other upper layers to manage different applications, Non-Access-Stratum (NAS) layer to communicate with an AMF entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network. In one example, the upper layer entities request information of the PDU session via which to send a PDU of an application, system modules and circuits 270 comprise a PDU session/PDN connection handling circuit 221 that performs PDU session/PDN connection establishment and modification procedures with the network, a URSP rule matching circuit 222 that performs URSP rule matching, and a configuration and control circuit 223 that handles configuration and control parameters for mobility management and session management.

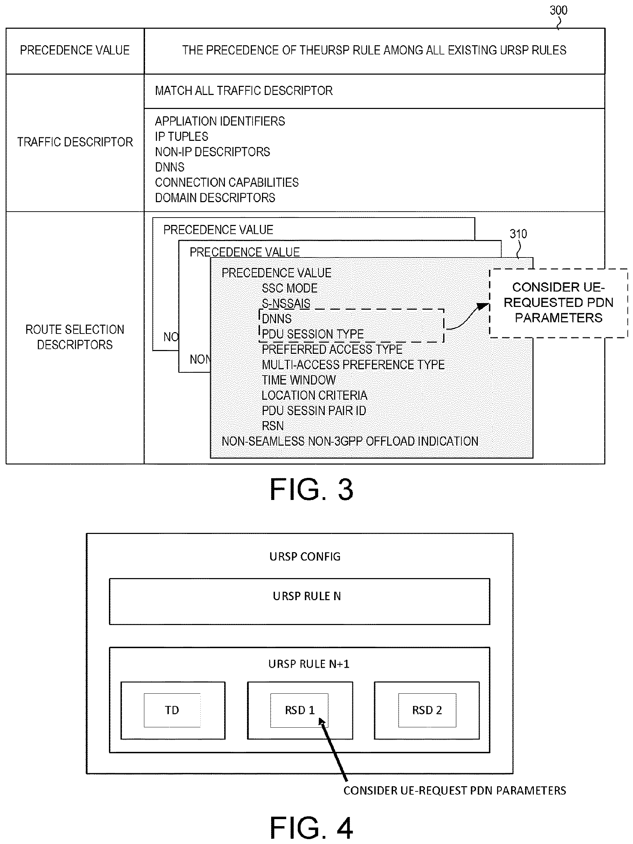

Figure 3 illustrates the content of a URSP rule as defined in 3GPP specification and parameters for URSP rule matching for MA PDU with PDN leg. URSP is defined as a set of one or more URSP rules. As depicted by Table 300, each URSP rule is composed of: 1) a precedence value of the URSP rule identifying the precedence of the URSP rule among all the existing URSP rules; 2) a traffic descriptor; and 3) one or more route selection descriptors. The traffic descriptor includes either 1) a match-all traffic descriptor; or 2) at least one of the following components: A) one or more application identifiers; B) one or more IP 3 tuples, i.e., the destination IP address, the destination port number, and the protocol used above the IP; C) one or more non-IP descriptors, i.e., destination information of non-IP traffic; D) one or more DNNs; E) one or more connection capabilities; and F) one or more domain descriptors, i.e., destination FQDN(s) .

Each route selection descriptor includes a precedence value of the route selection descriptor and either 1) one PDU session type and, optionally, one or more of the followings: A) session and service continuity (SSC) mode; B) one or more S-NSSAIs; C) one or more DNNs; D) PDU session type; E) preferred access type; F) multi-access preference; G) time window; H) location criteria; I) PDU session pair ID; and J) RSN; or 2) non-seamless non-3GPP offload indication. Only one URSP rule in the URSP can be a default URSP rule and the default URSP rule should contain a match-all traffic descriptor. If a default URSP rule and one or more non-default URSP rules are included in the URSP, any non-default URSP rule should have lower precedence value (i.e., higher priority) than the default URSP rule.

In one novel aspect, when performing URSP rule matching with an application in EPS, the UE matches a traffic descriptor (TD) of a selected URSP rule. The UE then selects a route selection descriptor (RSD) and determines. The UE has an MA PDU with a PDN connection established as user plane resource of the MA PDU session. The UE determines MA PDU session matches the RSD of the selected URSP rule, when UE-requested PDN parameters of the PDN connection match with the RSD of the selected URSP rule (310). As a result, this RSD can still be selected by the UE to be associated with the existing MA PDU for URSP rule matching.

Figure 4 illustrates examples of URSP rule matching for an application in EPS, where UE requested PDN parameters of a PDN connection of an MA PDU session are considered to match with certain RSD components of an RSD of a selected URSP rule. When an application is started on a UE in EPS, the UE upper layers trigger URSP rule matching. The UE evaluates the URSP rules, except the default URSP rule, with a traffic descriptor matching the application information in the order of their precedence values. If the UE finds the traffic descriptor (TD) in a non-default URSP rule matching the application information, and an established PDN connection matching at least one of the route selection descriptors of the URSP rule, the UE then provides information on the PDN connection that matches the route selection descriptor (RSD) of the lowest precedence value to the upper layers. Otherwise, the UE selects an RSD with the next smallest precedence value which has not been evaluated. If no matching is found, the UE evaluates the next URSP rules with a TD matching the application information in the order of their precedence values.

As depicted in Figure 4, the UE is configured with multiple URSP rules including URSP rule 1, ..., URSP rule N, URSP rule N+1, ..., and so on so forth. Each URSP rule comprises a TD and a list of (one or more) RSDs. For example, URSP rule N+1 includes a TD, RSD1 and RSD2. If the UE finds the TD in URSP rule N+1 matching the application information, the UE then selects an RSD, e.g., RSD1, with the next smallest precedence value for URSP rule matching. The UE then determines the RSD components and parameters in RSD1 and tries to match with an existing PDU session or to create a new PDU session.

In one novel aspect, UE has an MA PDU session with a PDN connection established as user plane resource of the MA PDU session. If the parameters requested by the UE during the PDN connectivity procedure to establish the PDN connection match the RSD1 of the URSP rule N+1, then the UE finds the TD in URSP rule N+1 matching the application information, and the established MA PDU/PDN connection matching RSD1 of the URSP rule N+1, the UE then provides information on the MA PDU/PDN connection that matches RSD1 to the upper layers.

On the other hand, if the UE ONLY considers the UE-requested parameters during PDU procedure (in 5GS), and does NOT consider the UE-requested parameters for a PDN connection during PDN procedure (in EPS), then the UE will not find RSD1 to be a match to the MA PDU/PDN connection. The UE will then select an RSD (e.g., RSD2) with the next smallest precedence value within URSP rule N+1 which has not been evaluated. The UE may select another RSD or URSP rule that does not best fit the application. Further, the UE may try to establish a new PDU session. If the PDU session establishment fails, the UE may continue to retry and waste time and resources.

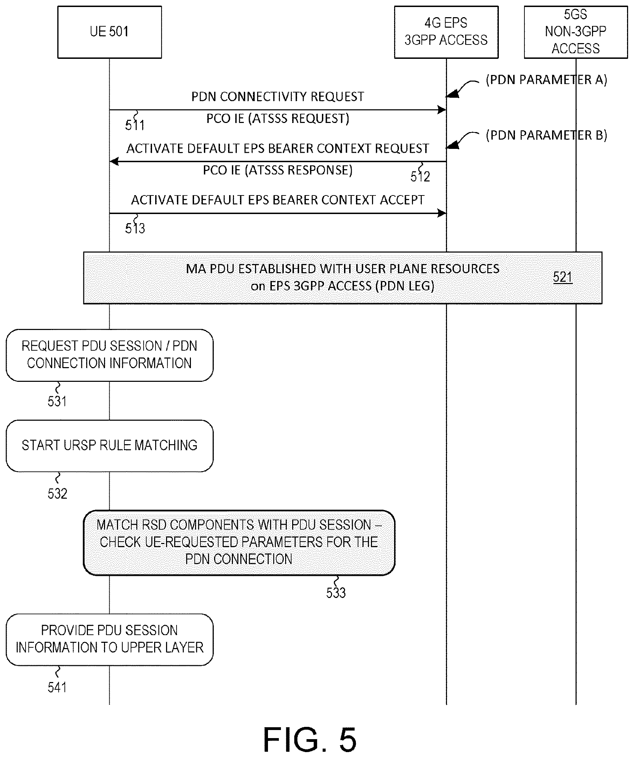

Figure 5 illustrates a first embodiment of a sequence flow between a UE and the network for URSP rule matching for MA PDU with PDN leg in accordance with one novel aspect. In step 511, UE 501 sends a PDN CONNECTIVITY REQUEST message to 4G EPS to establish a PDN connection as a user-plane resource for an MA PDU session. The UE sets the request type to "initial request" with UE-requested PDN parameters (UE-requested PDN parameter A). In the protocol configuration options (PCO) or extended PCO IE of the PDN CONNECTIVITY REQUEST message, the UE includes the ATSSS request PCO parameter. In step 512, UE 501 receives an ACTIVATE DEFAULT EPS BEARER CONTEXT REQUEST message of a default EPS bearer context activation procedure as a response to the PDN CONNECTIVITY REQUEST message (and the UE sends ACTIVATE DEFAULT EPS BEARER CONTEXT ACCEPT message to the network in step 513). The ACTIVATE DEFAULT EPS BEARER CONTEXT REQUEST message contains the extended PCO IE with the ATSSS response having the length of two octets PCO parameter, including the network-accepted or mapped PDN parameters (e.g., PDN parameter B).

In step 521, UE 501 considers that the MA PDU session (PSI==5) is established, with the PDN leg as 3GPP user plane resources of the MA PDU session. UE 501 stores MA PDU session parameters mapped from the default EPS bearer context of the PDN connection. For example, the APN of the default EPS bearer context shall be mapped to the DNN of the MA PDU session. In one specific example, the UE-requested PDN parameter A of the PDN connection is APN == IMS; however, the mapped PDN parameter B of the PDN connection is APN == VoLTE.

In step 531, upper layers of UE 501 request PDU session/PDN connection information, e.g., triggered by starting an application. In other words, the upper layers of the UE request information of the PDU session/PDN connection via which to send a PDU of an application. In order to determine the association between the application and a PDU session/PDN connection or non-seamless non-3GPP offload, the UE upper layers proceed with the URSP rule matching in step 532. In step 533, UE 501 selects a matching URSP rule, and then finds the existing MA PDU session/PDN connection matches an RSD of the selected URSP rule. For example, if the parameters requested by the UE during PDN connectivity procedure in step 511 (APN==IMS) matches the RSN of the URSP rule (APN==IMS), then the UE finds the TD in the URSP rule matches the application information, and the established MA PDU/PDN connection matching the RSD of the URSP rule. Note that the mapped PDN parameters of the MA PDU session is APN==VoLTE. In step 541, the UE provides information on the MA PDU session/PDN connection that matches the RSD of the selected URSP rule to the upper layers.

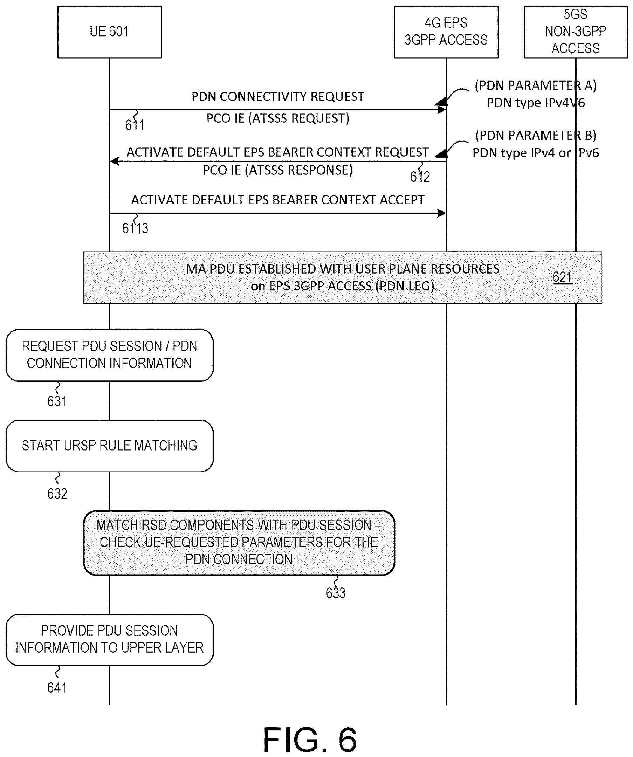

Figure 6 illustrates a second embodiment of a sequence flow between a UE and the network for URSP rule matching for MA PDU with PDN leg in accordance with one novel aspect. In step 611, UE 601 sends a PDN CONNECTIVITY REQUEST message to 4G EPS to establish a PDN connection as a user-plane resource for an MA PDU session. The UE sets the request type to "initial request", sets the PDN Type IE to "IPv4", "IPv6", or "IPv4v6" (e.g., PDN parameter A) . In the protocol configuration options (PCO) or extended PCO IE of the PDN CONNECTIVITY REQUEST message, the UE includes the ATSSS request PCO parameter. In step 612, UE 601 receives an ACTIVATE DEFAULT EPS BEARER CONTEXT REQUEST message of a default EPS bearer context activation procedure as a response to the PDN CONNECTIVITY REQUEST message (and the UE sends ACTIVATE DEFAULT EPS BEARER CONTEXT ACCEPT message to the network in step 613) . The ACTIVATE DEFAULT EPS BEARER CONTEXT REQUEST message contains the extended PCO IE with the ATSSS response having the length of two octets PCO parameter, including the network-accepted or mapped PDN parameters, such as PDN type = IPv4 or PDN type = IPv6 (e.g., PDN parameter B), with an ESM cause value.

Steps 631 to 641 of Figure 6 are similar to steps 531 to 541 of Figure 5. Specifically, in step 633, UE 601 finds that 1) the RSD with PDU session type IPv4v6 matches also with PDU session type IPv4 of the MA PDU session if the network has sent ESM cause is #50 "PDN type IPv4 only allowed" in a PDN connectivity procedure to establish the PDN connection as a user-plane resource of the MA PDU session; 2) the RSD with PDU session type IPv4v6 matches also with PDU session type IPv6 of the MA PDU session if the network has sent ESM cause is #51 "PDN type IPv6 only allowed" in a PDN connectivity procedure to establish the PDN connection as a user-plane resource of the MA PDU session; and 3) the RSD with PDU session type IPv4v6 matches also with PDU session type IPv4 or IPv6 of the MA PDU session if the UE has requested PDN type IPv4v6 but the network only allocates IPv4 or IPv6 in a PDN connectivity procedure to establish the PDN connection as a user-plane resource of the MA PDU session.

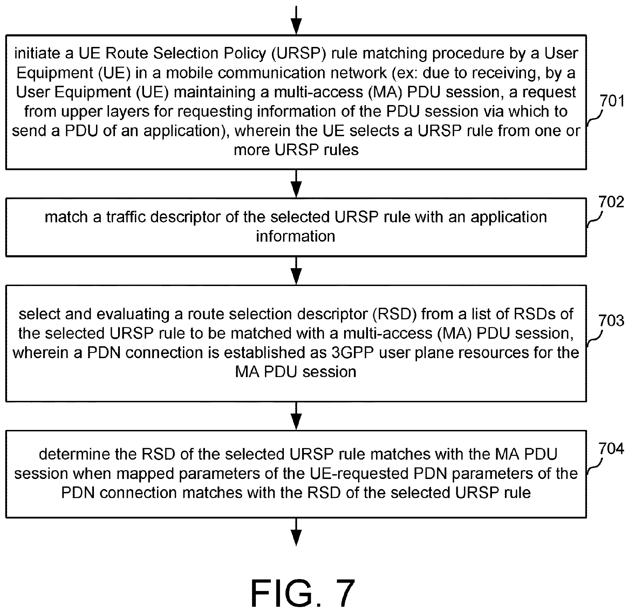

Figure 7 is a flow chart of a method of URSP rule matching in accordance with one novel aspect of the present invention. In step 701, a UE initiates a UE Route Selection Policy (URSP) rule matching procedure in a mobile communication network (ex: due to receiving, by a User Equipment (UE) maintaining a multi-access (MA) PDU session, a request from upper layers for requesting information of the PDU session via which to send a PDU of an application), wherein the UE selects a URSP rule from one or more URSP rules. In step 702, the UE matches a traffic descriptor of the selected URSP rule with an application information. In step 703, the UE selects and evaluating a route selection descriptor (RSD) from a list of RSDs of the selected URSP rule to be matched with a (active) multi-access (MA) PDU session maintained by the UE, wherein a PDN connection is established as (a) 3GPP user plane resource (s) for the MA PDU session. In step 704, the UE determines the RSD of the selected URSP rule matches with the MA PDU session when the mapped parameters from the parameters requested by the UE during UE-requested PDN parameters of the PDN connection matches with the RSD of the selected URSP rule. Afterward, the UE can provide information on the MA PDU session that matches the RSD to upper layer. So the upper layer / application knows the traffic from the upper layer / application can be sent over this MA PDU session. Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, **characterized by** comprising:
receiving, by a User Equipment (UE) in a mobile communication network maintaining a multi-access (MA) PDU session, a request from upper layers for requesting information of the PDU session via which to send a PDU of an application;
selecting a URSP rule containing a traffic descriptor, from one or more URSP rules, wherein the traffic descriptor of the selected URSP rule matches the application information;
selecting and evaluating a route selection descriptor (RSD) from a list of RSDs of the selected URSP rule to be matched with the multi-access (MA) PDU session, wherein a PDN connection is established as user plane resource for the MA PDU session; and
determining the RSD of the selected URSP rule matches with the MA PDU session when mapped parameters of the UE-requested PDN parameters of the PDN connection matches with the RSD of the selected URSP rule.

2. A User Equipment (UE), **characterized by** comprising:
a request handling circuit that receives a request from upper layers for requesting information of the PDU session via which to send a PDU of an application, wherein the UE maintains a multi-access (MA) PDU session in a mobile communication network;
an upper layer handling circuit that selects a URSP rule containing a traffic descriptor from one or more URSP rules, wherein a traffic descriptor of the selected URSP rule matches the application information, wherein the UE selects and evaluates a route selection descriptor (RSD) from a list of RSDs of the selected URSP rule to be matched with the multi-access (MA) PDU session, wherein a PDN connection is established as user plane resources for the MA PDU session; and
a control circuit that determines the RSD of the selected URSP rule matches with the MA PDU session when mapped parameters of the UE-requested PDN parameters of the PDN connection matches with the RSD of the selected URSP rule.

3. The method of Claim 1 or the UE of Claim 2, **characterized in that** the PDN connection is established via a PDN connectivity procedure in an evolved packet system (EPS).

4. The method or the UE of Claim 3, **characterized in that** the UE-requested PDN parameters is requested by the UE during the PDN connectivity procedure.

5. The method or the UE of Claim 3, **characterized in that** the PDN connection has different PDN parameters that are mapped from the parameters sent from the network to the UE upon activation of EPS bearer context for the PDN connection.

6. The method or the UE of Claim 3, **characterized in that** the UE provides information on the MA PDU session that matches the RSD to upper layer.

7. The method of Claim 1 or the UE of Claim 2, **characterized in that** the RSD with PDU session type IPv4v6 matches also with PDU session type IPv4 of the MA PDU session if the network has sent ESM cause is #50 "PDN type IPv4 only allowed" to the UE in a PDN connectivity procedure to establish the PDN connection as a user-plane resource of the MA PDU session.

8. The method of Claim 1 or the UE of Claim 2, **characterized in that** the RSD with PDU session type IPv4v6 matches also with PDU session type IPv6 of the MA PDU session if the network has sent ESM cause is #51 "PDN type IPv6 only allowed" to the UE in a PDN connectivity procedure to establish the PDN connection as a user-plane resource of the MA PDU session.

9. The method of Claim 1 or the UE of Claim 2, **characterized in that** the RSD with PDU session type IPv4v6 matches also with PDU session type IPv4 or IPv6 of the MA PDU session if the UE has requested PDN type IPv4v6 but the network only allocates IPv4 or IPv6 in a PDN connectivity procedure to establish the PDN connection as a user-plane resource of the MA PDU session.
